# EUROPÄISCHE PATENTSCHRIFT

(11) **EP 0 391 142 B1**
(45) Veröffentlichungstag und Bekanntmachung des Hinweises auf die Patenterteilung: **16.02.1994**
(21) Anmeldenummer: 90105335.5
(22) Anmeldetag: 21.03.1990
(51) Int. Cl.: G02F 1/1341

(54) **Verfahren zum Befüllen einer Flüssigkristallzelle**
Method of filling a liquid-crystal cell
Procédé de remplissage d'une cellule à cristal liquide

(30) Priorität: 07.04.1989 DE 3911359
(43) Veröffentlichungstag der Anmeldung: 10.10.1990
(73) Patentinhaber: Nokia (Deutschland) GmbH, 75175 Pforzheim (DE)
(72) Erfinder: Brosig, Stefan, Dr., D-7000 Stuttgart (DE)

(56) Entgegenhaltungen:
- PATENT ABSTRACTS OF JAPAN vol. 1, no. 163 (E-78)22. Dezember 1977 & JP-A-52 108 834
- PATENT ABSTRACTS OF JAPAN vol. 5, no. 173 (P-87)(845) 5. November 1981 & JP-A-56 101 126
- PATENT ABSTRACTS OF JAPAN vol. 12, no. 210 (P-717)(3057) 16. Juni 1988 & JP-A-63 8 630
- PATENT ABSTRACTS OF JAPAN vol. 12, no. 97 (P-682)(2944) 30. März 1988 & JP-A-62 231 213

## Beschreibung

### TECHNISCHES GEBIET

Die Erfindung betrifft ein Verfahren zum Befüllen einer Flüssigkristallzelle mit einem Flüssigkristallmaterial. Das Flüssigkristallmaterial ist in der Regel eine Mischung aus verschiedenen flüssigkristallinen Substanzen. Es wird darauf hingewiesen, daß im folgenden statt von Flüssigkristallzellen der Kürze halber nur von Zellen gesprochen wird.

### STAND DER TECHNIK

Es sind verschiedene Verfahren zum Befüllen von Zellen mit Flüssigkristallmaterial bekannt. Ein erstes Verfahren besteht darin, eine evakuierte Zelle so weit abzusenken, daß sie in Flüssigkristallmaterial taucht, das sich in einem Behälter innerhalb des Vakuumgefäßes befindet. Dann wird das Vakuumgefäß langsam belüftet, wodurch das Flüssigkristallmaterial in den Zellinnenraum gedrückt wird. Die Geschwindigkeit des Belüftens hängt von der Viskosität des Flüssigkristallmaterials ab. Es muß vermieden werden, daß das Material zu schnell einströmt, da dadurch die Orientierungseigenschaften von Orientierungsschichten verändert werden könnten oder Spacer weggerissen werden könnten. Andererseits soll die Einströmgeschwindigkeit nicht zu niedrig sein, um einen ausreichend hohen Fertigungsdurchsatz zu erzielen. Es ist daher auch bekannt, hochviskose Flüssigkristallmaterialien, z. B. ferroelektrisch oder smektische Materialien, zu beheizen, damit sie ausreichend schnell durch die Füllöffnung in den Zellinnenraum einströmen.

Gemäß einem anderen Verfahren wird auf eine nach oben zeigende Füllöffnung einer Zelle Flüssigkristallmaterial aufgetragen, dann wird schnell belüftet, die Zelle wird dem Vakuumgefäß entnommen, und sie wird in einem Ofen angeordnet, und ihre Füllöffnung wird mit einem Reservoir von Flüssigkristallmaterial verbunden.

Gemäß einem dritten Verfahren wird ebenfalls eine Flüssigkristallzelle mit ihrer Füllöffnung nach oben in einem Vakuumgefäß angeordnet. Auf die Füllöffnung wird eine Menge an Flüssigkristallmaterial aufgetragen, die ausreicht, den gesamten Zellinnenraum zu befüllen. Nach diesem Auftragen wird das Vakuumgefäß langsam belüftet, damit der Befüllvorgang stattfindet.

Aus der Schrift JP-A-52-108834 ist ein weiteres Verfahren zum Befüllen von Flüssigkristallzellen bekannt. Die Flüssigkristallzelle wird dabei so weit abgesenkt, daß ihre Füllöffnung in ein Gefäß mit Flüssigkristallmaterial eintaucht. Sodann wird die Flüssigkristallzelle aus dem Gefäß mit Flüssigkristallmaterial entfernt, wobei ein Tropfen Flüssigkristallmaterial an der Füllöffnung hängen bleibt. In einem nächsten Verfahrensschritt wird dann die Flüssigkristallzelle in einem Vakuumgefäß evakuiert. Im Anschluß daran wird das Vakuumgefäß mit der Folge belüftet, daß der an der Füllöffnung hängende Tropfen unter Wirkung des äußeren Luftdrucks in das Zelleninnere hineingedrückt wird.

### DARSTELLUNG DER ERFINDUNG

Das erfindungsgemäße Verfahren zum Befüllen einer Flüssigkristallzelle mit einem Flüssigkristallmaterial zeichnet sich durch folgende Schritte aus:
- Evakuieren der Flüssigkristallzelle in einem Vakuumgefäß,
- Absenken der evakuierten Flüssigkristallzelle und zwar so weit, daß ihre Füllöffnung, die sich in einem Eck der Zelle befindet, in ein Gefäß mit Flüssigkristallmaterial taucht,
- Absenken der Flüssigkristallzelle so weit, daß das Eck mit der Füllöffnung wieder vom Flüssigkristallmaterial getrennt wird, wobei ein Tropfen Flüssigkristallmaterial am genannten Eck hängen bleibt, und wobei das Volumen der Flüssigkristallzelle so bemessen ist, daß das Tropfenvolumen ausreicht, um den Zellinnenraum zu befüllen,
- schnelles Belüften des Vakuumgefäßes,
- Entnehmen der Flüssigkristallzelle aus dem Vakuumgefäß und so lange nach unten halten, bis der Zellinnenraum durch das Flüssigkristallmaterial im aufgebrachten Tropfen befüllt ist.

Das erfindungsgemäße Verfahren zeichnet sich durch kaum mehr zu überbietende Einfachheit aus. Innerhalb des Vakuumgefäßes ist keine spezielle Vorrichtung erforderlich, um Flüssigkristallmaterial auf eine Füllöffnung aufzutragen, sondern das Auftragen eines Tropfens auf die Füllöffnung erfolgt dadurch, daß lediglich die Zelle mit ihrer Füllöffnung in Flüssigkristallmaterial eingetaucht und dann wieder aus dem Flüssigkristallmaterial hochgezogen wird. Damit so wenig Flüssigkristallmaterial wie möglich bei diesem Verfahrensschritt verloren geht, wird eine Zelle verwendet, deren Füllöffnung sich in einem Zelleneck befindet. Durch dieses Absenken und Wiederhochziehen können gleichzeitig die Füllöffnungen von einem ganzen Stapel von Zellen mit jeweils einem Tropfen von Flüssigkristallmaterial versehen werden. Es ist also nicht erforderlich, gesonderte Fülleinrichtungen von der Füllöffnung einer Zelle zur Füllöffnung der nächsten Zelle zu bewegen, falls mehrere Zellen in einem Vakuumgefäß angeordnet werden. Ein weiterer wichtiger Vorteil ist der, daß das Vakuumgefäß nur für die gerade zum Evakuieren erforderliche Zeitspanne belegt wird, nicht aber auch zum Befüllen einer Zelle. Dadurch werden für einen vorgegebenen Fertigungsdurchsatz weniger der teuren und störanfälligen Vakuumgefäße benötigt, als dies der Fall ist, wenn auch das Befüllen innerhalb des Vakuumgefäßes stattfindet.

Das erfindungsgemäße Verfahren kann mit allen Arten von Flüssigkristallmaterialien ausgeführt werden, also sowohl hochviskosen smektischen oder ferroelektrischen Materialien, wie auch niedrigviskosen nematischen Materialien. Die jeweils optimale Temperatur zum Bilden eines Tropfens gewünschter Größe wird durch Erwärmen (bei hochviskosen Materialien) oder wird durch Kühlen (bei niedrigviskosen Materialien) eingestellt. Falls erforderlich, wird auch zusätzlich die Zelle zumindest im Bereich der Füllöffnung erwärmt oder gekühlt.

### ZEICHNUNG

- Fig. 1: schematische Darstellung von fünf Verfahrensschritten 1.1 - 1.5 zum Befüllen einer Zelle mit kleinem Volumen; und
- Fig. 2: schematische Darstellung ähnlich der von Fig. 1, mit drei Verfahrensschritten, von denen sich der erste mit dem Verfahrensschritt 1.3 und der letzte mit dem Verfahrensschritt 1.5 gemäß Fig. 1 deckt, der Verfahrensschritt 1.4 jedoch durch einen Verfahrensschritt 2.1 ersetzt ist.

### BESCHREIBUNG VON AUSFÜHRUNGSBEISPIELEN

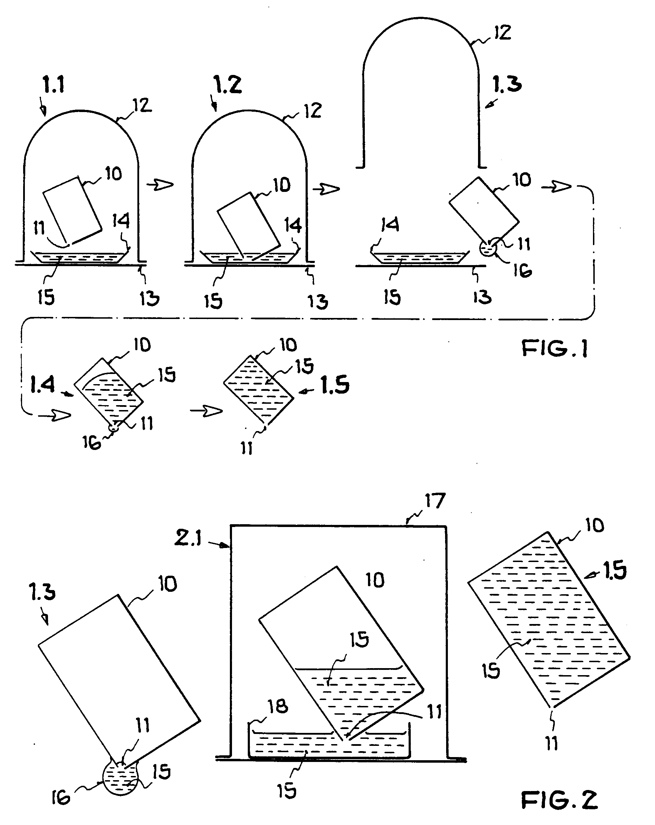

In einem Verfahrensschritt, der in Fig. 1 mit 1.1 bezeichnet ist, befindet sich eine Flüssigkristallzelle 10 mit nach unten angeordneter Füllöffnung 11 in einem Vakuumgefäß 12. Auf dem Boden des Vakuumgefäßes 13 befindet sich ein Schiffchen 14 mit Flüssigkristallmaterial 15. Das Vakuumgefäß 12 wird evakuiert, wodurch auch die Zelle 10 durch die Füllöffnung 11 evakuiert wird.

Beim Verfahrensschritt 1.2 ist die Zelle 10 so weit gegen den Boden 13 abgesenkt, daß ihre Füllöffnung 11 in das Flüssigkristallmaterial 15 taucht.

Die Darstellung zu einem folgenden Schritt 1.3 zeigt einen Zustand, in dem die Glocke des Vakuumgefäßes vom Boden 13 abgehoben ist. Die Zelle 10 wird so weit angehoben, daß sie nicht mehr in das Flüssigkristallmaterial 15 im Schiffchen 14 taucht, damit sie aus dem Vakuumgefäß 12 heraustransportiert werden kann. Ihre Füllöffnung 11 ist nun durch einen Flüssigkristalltropfen 16 verschlossen.

Im einem folgenden Verfahrensschritt 1.4 wird der Flüssigkristalltropfen 16 so weit erwärmt, daß er ausreichend dünnflüssig wird, daß das Flüssigkristallmaterial in die Zelle 10 gesaugt werden kann. Schließlich ist, wie durch den Schritt 1.5 dargestellt, im wesentlichen das gesamte Volumen des Tropfen 16 in die Zelle 10 gesaugt. Der Füllvorgang ist damit abgeschlossen.

Der Verfahrensablauf gemäß Fig. 1 ist anwendbar, wenn das Volumen der Zelle 10 verhältnismäßig gering ist. Ist jedoch ein relativ großes Volumen zu befüllen, wird vorgegangen, wie in Fig. 2 dargestellt.

Der Verfahrensablauf, auf den sich Fig.2 bezieht, beinhaltet die bereits erläuterten Schritte 1.1 - 1.3. An den Schritt 1.3 schließt sich jedoch ein Schritt 2.1 an, in dem die Flüssigkristallzelle 10 in einen Ofen 17 eingesetzt wird, in dem sich ein Ofenschiffchen 18 mit Flüssigkristallmaterial 15 befindet. In dieses Flüssigkristallmaterial 15 wird die Zelle 10 mit ihrer Füllöffnung eingetaucht. Die Zelle 10 bleibt so lange im Ofen, bis sie befüllt ist, welcher Zustand in Fig. 2 ganz rechts dargestellt ist. Dieser letzte Schritt ist in Fig. 2 wie in Fig. 1 mit 1.5 bezeichnet. Es wird darauf hingewiesen, daß die Füllöffnung 11 abschließend mit einem Kleber in üblicher Weise verschlossen wird.

Bei einem ersten Ausführungsbeispiel war das Flüssigkristallmaterial das ferroelektrische smektische Material mit der Nummer ZLI-3654 von der Firma Merck. Dieses Material ist bei 20 °C so hochviskos, daß ein Tropfen dieses Materials nicht durch eine Füllöffnung üblicher Größe in eine evakuierte Zelle gedrückt wird, wenn diese, mit einem solchen Tropfen verschlossen, Atmosphärendruck ausgesetzt wird. Es muß vielmehr bis auf etwa 90 °C erhitzt werden, damit ein Füllvorgang mit ausreichender Geschwindigkeit bewerkstelligt werden kann. Bei 76 °C weist dieses Material einen Phasenübergang von smektisch nach cholesterisch auf. Bei etwa 86 °C liegt der Klärpunkt. Wird über den Klärpunkt hinaus erhitzt, wird das Material sehr dünnflüssig. Der Füllvorgang erfolgt dann aber unter Umständen, je nach Größe der Füllöffnung, so schnell, daß durch Strömungskräfte die Ausrichteigenschaften einer Orientierungsschicht gestört werden.

Bei einem anderen Ausführungsbeispiel wurde die TFT-Mischung ZLI-3033 der Firma Merck verwendet. Diese mußte auf etwa - 30 °C gekühlt werden, um einen ausreichend zähen Tropfen zum Verschließen einer Zelle zu erhalten. Bei 20 °C ist dieses Material so dünnflüssig, daß ein Füllvorgang mit zufriedenstellender Geschwindigkeit ausgeführt werden kann. Es ist daher nicht erforderlich, eine Zelle in einem Ofen anzuordnen, unabhängig davon, ob das Tropfenvolumen zum Befüllen der Zelle ausreicht oder die Zelle in ein Schiffchen mit Flüssigkristallmaterial einzutauchen ist.

Soll das Tropfenvolumen zum Befüllen der Zelle ausreichen, ist darauf zu achten, daß sich aufgrund der bei unterschiedlichen Temperaturen unterschiedlichen Oberflächenkräfte ein Tropfen einer solchen Größe erzielen läßt, daß sein Volumen zum Befüllen der Zelle mit Sicherheit ausreicht. Vorzugsweise wird das Tropfenvolumen so gewählt, daß es im Mittel einiges größer ist als das Zellenvolumen. Dann reicht auch das Volumen von Tropfen unterdurchschnittlicher Größe noch aus, die gesamte Zelle zu befüllen. Bei Tropfen durchschnittlicher oder gar überdurchschnittlicher Größe wird überschüssiges Material bei Abschluß des Füllvorganges abgewischt. Dann erfolgt das Verschließen der sich in einem Eck der Zelle befindlichen Füllöffnung.

## Patentansprüche

1. Verfahren zum Befüllen einer Flüssigkristallzelle mit einem Flüssigkristallmaterial, mit den Schritten, daß
- die Flüssigkristallzelle in einem Vakuumgefäß evakuiert wird,
- die evakuierte Flüssigkristallzelle abgesenkt wird, und zwar so weit, daß ihre Füllöffnung, die sich in einem Eck der Zelle befindet, in ein Gefäß mit Flüssigkristallmaterial taucht,
- die Flüssigkristallzelle so weit hochgezogen wird, daß das Eck mit der Füllöffnung wieder vom Flüssigkristallmaterial getrennt wird, wobei ein Tropfen Flüssigkristallmaterial am genannten Eck hängen bleibt, und wobei das Volumen der Flüsskristallzelle so bemessen ist, daß das Tropfenvolumen ausreicht, um den Zellinnenraum zu befüllen,
- das Vakuumgefäß schnell belüftet wird,
- und die Flüssigkristallzelle dem Vakuumgefäß entnommen wird und so lange mit der Füllöffnung nach unten gehalten wird, bis der Zellinnenraum durch das Flüssigkristallmaterial im aufgebrachten Tropfen befüllt ist.

2. Verfahren nach Anspruch 1, **dadurch gekennzeichnet,** daß die Flüssigkristallzelle zum Befüllen mit Flüssigkristallmaterial, das bei Zimmertemperatur niedrigviskos ist, im Bereich der Füllöffnung gekühlt wird, damit das Flüssigkristallmaterial nicht zu schnell eingesaugt wird.

3. Verfahren nach Anspruch 1, **dadurch gekennzeichnet,** daß die Flüssigkristallzelle zum Befüllen mit Flüssigkristallmaterial, das bei Zimmertemperatur höherviskos ist, beheizt wird, nachdem sie dem Vakuumgefäß entnommen worden ist.

## Claims

1. A method for filling a liquid crystal cell with a liquid crystal material, the steps being that
- said liquid crystal cell is evacuated in a vacuum vessel,
- said evacuated liquid crystal cell is lowered sufficiently for its filler opening, which is in a corner of said cell, to be immersed into a vessel with liquid crystal material,
- said liquid crystal cell is raised sufficiently for said corner with said filler opening to be separated again from said liquid crystal material, with one droplet of said liquid crystal material remaining suspended at said corner and with the volume of said liquid crystal cell being dimensioned such that the volume of said droplet is sufficient to fill the interior of said cell,
- said vacuum vessel is quickly filled with air,
- and said liquid crystal cell is removed from said vacuum vessel and held with its filler opening downwards long enough for said cell interior to be filled by said liquid crystal material in the applied droplet.

2. A method in accordance with Claim 1,
**characterized in that**
said liquid crystal cell is cooled in the vicinity of said filler opening for filling with liquid crystal material which has low viscosity at room temperature, in order that said liquid crystal material is not drawn in too quickly.

3. A method in accordance with Claim 1,
**characterized in that**
after being removed from said vacuum vessel, said liquid crystal cell is heated for filling with liquid crystal material which has a higher viscosity at room temperature.

## Revendications

1. Procédé pour le remplissage d'une cellule à cristaux liquides, avec les phases suivantes:
- la cellule à cristaux liquides est évacuée dans un vase à vide,
- la cellule à cristaux liquides évacuée est abaissée et ce jusqu'à ce que son ouverture de remplissage, située dans un angle de la cellule, plonge dans un récipient avec du matériau mésophorme,
- la cellule à cristaux liquides est remontée jusqu'à ce que l'angle avec l'ouverture de remplissage soit à nouveau séparée du matériau mésophorme, une goutte de matériau mésophorme restant attachée au dit angle et le volume de la cellule à cristaux liquides étant dimensionné de telle sorte que le volume de gouttes soit suffisant pour remplir l'espace intérieur de la cellule,
- le vase à vide est rapidement aéré,
- et la cellule à cristaux liquides est retirée du vase à vide et est maintenue avec l'ouverture de remplissage vers le bas jusqu'à ce que l'espace intérieur de la cellule soit rempli par le matériau mésophorme dans la goutte appliquée.

2. Procédé selon la revendication 1, caractérisé en ce que la cellule à cristaux liquides à remplir avec du matériau mésophorme, qui est de basse viscosité à température ambiante, est refroidie au niveau de l'ouverture de remplissage, pour que le matériau mésophorme liquides ne soit pas aspiré trop rapidement.

3. Procédé selon la revendication 1, caractérisé en ce que la cellule à cristaux liquides à remplir avec du matériau mésophorme qui est de viscosité plus élevée à température ambiante, est chauffée, après avoir été prélevée du vase à vide.
